Europäisches Patentamt

European Patent Office

Office européen des brevets

Veröffentlichungsnummer: **0 509 474 A2**

# EUROPÄISCHE PATENTANMELDUNG

Anmeldenummer: **92106493.7**

Anmeldetag: **15.04.92**

Int. Cl.5: **B09B** 3/00, A62D 3/00, B01D 11/02

Priorität: **19.04.91 DE 4112867**

Veröffentlichungstag der Anmeldung: **21.10.92 Patentblatt 92/43**

Benannte Vertragsstaaten: **BE CH DE DK FR GB LI NL**

Anmelder: **Dyckerhoff & Widmann Aktiengesellschaft Erdinger Landstrasse 1 W-8000 München 81(DE)**

Erfinder: **Die Erfinder haben auf ihre Nennung verzichtet**

Vertreter: **Patentanwälte Dipl.-Ing. F.W. Möll Dipl.-Ing. H.Ch. Bitterich Langstrasse 5 Postfach 2080 W-6740 Landau/Pfalz(DE)**

Verfahren zum Dekontaminieren von mit Schadstoffen verunreinigten Böden.

Ein mit Schadstoffen verunreinigter Boden wird zum Dekontaminieren nach einer Vorklassierung und einer Leichtstoff- und Metallabscheidung mit einem Extraktionsmedium behandelt, durch das die Schadstoffe gelöst, ausgetragen und/oder in unlösliche Stoffe umgewandelt werden. Zu dieser Behandlung werden in dem zu behandelnden Boden zunächst Porenräume erzeugt bzw. vorhandene Porenräume vergrößert, durch die das Extraktionsmedium geleitet wird, wobei die Kontaktzeiten zwischen dem Boden und dem Extraktionsmedium so gewählt werden, daß die Schadstoffe im Wege der Diffusion von diesem aufgenommen werden. Zweckmäßig wird der zu behandelnde Boden in unterschiedliche Kornfraktionen getrennt und werden diese getrennt voneinander behandelt. Ausgehend von der Erkenntnis, daß die Durchströmung eines Bodens wesentlich von dem zur Verfügung stehenden Porenraum abhängt, ermöglicht es die Erfindung, gezielt Porenräume in der Weise zu schaffen, daß sie ein bestimmtes Volumen des Extraktionsmittels aufnehmen und durchtransportieren können, also ein bestimmtes Diffusionsgefälle einzustellen. Dadurch wird es möglich, die Extraktion so zu führen, daß - je nach Extraktionsmittel - unterschiedliche Schadstoffe in kurzer Zeit weitestgehend aus dem verunreinigten Boden entfernt werden können.

Die Erfindung betrifft ein Verfahren zum Dekontaminieren von mit Schadstoffen, wie z.B. Schwermetalle, Kohlenwasserstoffe, persistente Giftstoffe oder dergleichen verunreinigten Böden gemäß dem Oberbegriff des Patentanspruchs 1 sowie eine Einrichtung zur Durchführung des Verfahrens.

Die Sanierung schadstoffbelasteter Bodenflächen gewinnt zunehmend an Bedeutung. Bei den bisher bekanntgewordenen sanierungsbedürftigen Standorten handelt es sich unter anderem um ehemalige Produktionsstätten verschiedener Industrien, ehemalige Gaswerke und Kokereien sowie ehemalige Schrottplätze oder metallverarbeitende Betriebe. Das Spektrum der Verunreinigungen reicht von

- teerartigen Substanzen (polyzyklische aromatische Kohlenwasserstoffe),
- BTX-Aromaten, anderen Kohlenwasserstoffen und zyanidhaltigen Verbindungen, wie sie für ehemalige Gaswerke und Kokereien typisch sind, bis hin zu
- mehr oder weniger giftigen Metallverbindungen (vor allem Arsen und Schwermetalle),
- verschiedenartigen Lösungsmitteln, die zur Entfettung von Metallteilen eingesetzt werden und
- Kohlenwasserstoffen, die mit weiteren Zusätzen verunreinigt sein können (Dieselöl, Transformatoren- oder Hydrauliköl).

Dazu können weitere, hier nicht genannte Stoffe bzw. Stoffgruppen kommen.

Zur Dekontaminierung von mit Schadstoffen belasteten Böden sind verschiedene Verfahren bekanntgeworden, die aber meist nur die Beseitigung bestimmter Schadstoffe zum Gegenstand haben. So ist ein Verfahren zur kontinuierlichen Entfernung von Schwermetall-, insbesondere Quecksilberverbindungen aus kontaminierten Böden bekannt, nach welchem der Boden zunächst klassiert und der feine Anteil mit einer Korngröße bis zu 20 mm in einem trommelförmigen beheizten Extraktionsreaktor gegenströmig mit einem erwärmten Extraktionsmittel behandelt wird (DE-C 38 12 986). Danach werden der Feinanteil und der Grobanteil des Bodens filtriert und mit Wasser gewaschen sowie in einem Trommeltrockner getrocknet.

Zur Aufbereitung von schwermetallhaltigen Schlämmen ist ein Verfahren bekannt, bei dem der Dünnschlamm zunächst eingedickt und dann in einer Attritionszelle mit einer starken Mineralsäure, z.B. Salzsäure, behandelt wird, durch die Schwermetalle herausgelöst und an Feststoff anhaftende Kohlenwasserstoffe vom Feststoff gelöst werden sollen (DE-C 39 19 788). Der von den Schwermetallen befreite Feststoff wird dann von der die Schwermetalle enthaltenden Lösung durch Dekantieren abgetrennt und durch Zugabe von basischen Stoffen neutralisiert und rieselfähig gemacht. Die Schwermetallverbindungen werden aus der Lösung abgeschieden, um sie gegebenenfalls einer Weiterverarbeitung zuzuführen.

Die bekannten Verfahren zur Dekontaminierung ähneln Waschverfahren, bei denen der zu behandelnde Boden in kontinuierlichem Durchlauf mit dem Extraktionsmittel beaufschlagt, oft mit diesem zusammen auch gegenströmig bewegt wird, z.B. durch Rotation einer Trommel mit im wesentlichen horizontaler Achse. Das Hauptaugenmerk wird dabei auf die Behandlung des Extraktionsmittels gelegt, das, schon aus Gründen der Wirtschaftlichkeit und der Umweltverträglichkeit im Kreislauf geführt und von den Schadstoffen befreit wird; diese müssen, sofern sie nicht einer Wiederverwendung zugeführt werden können, entsorgt werden. Durch ein solches Waschverfahren läßt sich aber weder der Bodenzusammensetzung, noch der Art der Schadstoffe in ausreichender Weise Rechnung tragen.

Vor diesem Hintergrund liegt der Erfindung die Aufgabe zugrunde, ein Verfahren der eingangs angegebenen Art so zu führen, daß die unterschiedlichsten Schadstoffe in möglichst kurzer Zeit möglichst vollständig aus einem verunreinigten Boden entfernt werden können.

Nach der Erfindung wird diese Aufgabe durch die im kennzeichnenden Teil des Patentanspruchs 1 angegebenen Merkmale gelöst.

Vorteilhafte Weiterbildungen ergeben sich aus den Unteransprüchen.

Die Erfindung gründet sich auf die Erkenntnis, daß die Schadstoffe an den Bodenteilchen nicht nur an deren Oberfläche haften, von der sie durch einen einfachen Waschvorgang mehr oder weniger vollständig gelöst werden können, sondern auch in deren Innerem vor allem durch Adsorption gehalten werden. Grundlage der Erfindung ist deshalb der Gedanke, in dem zu behandelnden Boden die Porenräume zu vergrößern, um so die Voraussetzung für eine Desorption zu schaffen, d.h. ein ausreichendes Beladungsvolumen gekoppelt mit einer ausreichenden Austauschgeschwindigkeit, um die Schadstoffe durch Diffusionsvorgänge infolge eines möglichst großen Konzentrationsgefälles aus den Bodenteilchen herauslösen und durch das Extraktionsmittel austragen zu können. Die Erfindung bedient sich dabei der Erkenntnis, daß die Durchströmung eines Bodens wesentlich von dem zur Verfügung stehenden Porenraum abhängt; je größer der Porenraum ist, desto leichter kann er durchströmt werden und umgekehrt. So ermöglicht es die Erfindung, gezielt Porenräume in der Weise zu schaffen, daß sie ein bestimmtes Volumen des Extraktionsmittels aufnehmen und durchtransportieren können, also ein bestimmtes Diffusionsgefälle einzustellen.

Aus der weiteren Erkenntnis heraus, daß die in den Böden vorhandenen Korngruppen unterschiedlich lange Behandlungszeiten zum Extrahieren der Schadstoffe benötigen, wird nach der Erfindung vorgeschlagen, den zu behandelnden Boden in unterschiedliche Kornfraktionen zu trennen und diese getrennt voneinander zu behandeln. Durch die Trennung des Bodens in unterschiedliche Kornfraktionen gelingt auch auf sehr einfache Weise die Erzeugung entsprechend großer Porenräume, die erfindungsgemäß Voraussetzung für eine gleichmäßige Durchströmung des Bodens durch das Extraktionsmittel ist.

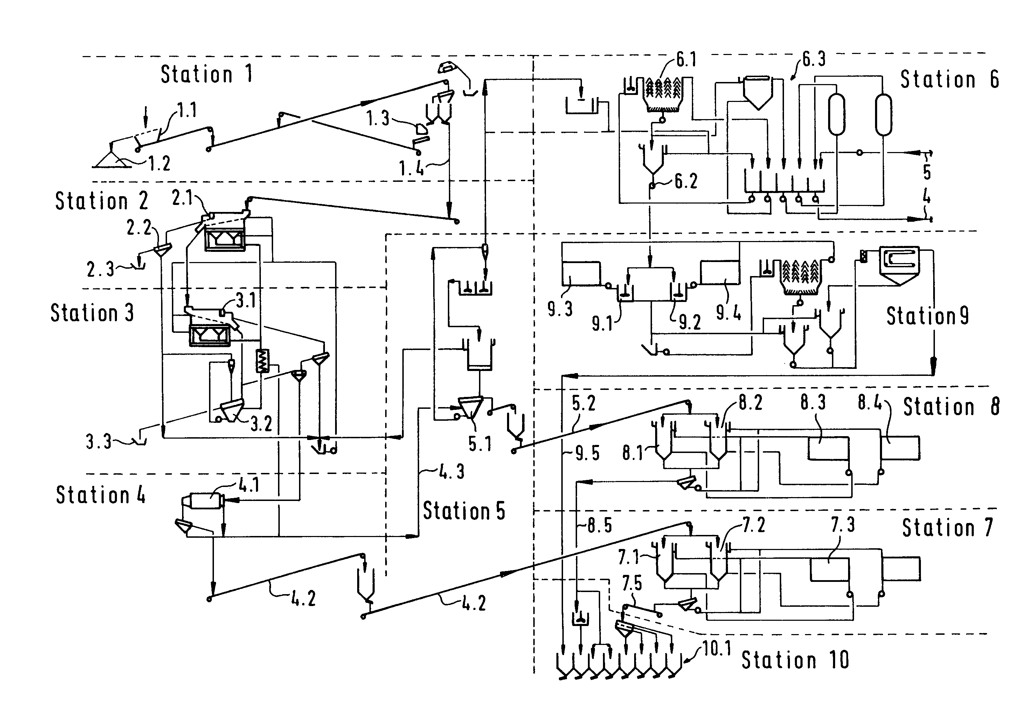

Das erfindungsgemäße Verfahren kann anhand der Zeichnung im wesentlichen wie folgt beschrieben werden.

Eine Anlage zur Behandlung von dekontaminiertem Boden, in der unter anderem das erfindungsgemäße Verfahren durchgeführt werden kann, umfaßt eine Reihe von Stationen, die in der Zeichnung durch gestrichelte Linien voneinander getrennt sind.

In der ersten Behandlungsstation 1 "Beschickung/Zerkleinerung" wird der zu behandelnde Boden z.B. mittels Lader in einen Aufgabetrichter 1.1 aufgegeben. Während ein etwa vorhandenes Überkorn, z.B. größer 300 mm, abgesiebt und gesondert behandelt bzw. deponiert werden kann (1.2), wird das übrige Material grob klassiert, gegebenenfalls in einer Prallmühle 1.3 zerkleinert und dann insgesamt der nächsten Station 2 "Leichtstoffabscheidung" zugeführt (Pfeil 1.4). Sowohl die "Leichtstoffabscheidung" 2, als auch die dieser nachgeordnete Station 3 "Metallabscheidung" umfassen jeweils eine Setzmaschine 2.1 und 3.1, denen Waschsiebe 2.2, 3.2 nachgeordnet sind. Die abgeschiedenen Stoffe werden bei 2.3 bzw. 3.3 ausgetragen.

In den beiden Stationen 2 und 3 wird schon der für die Durchführung des erfindungsgemäßen Verfahrens wesentliche Aufschluß des Bodens in mehrere, hier in drei Kornfraktionen, nämlich kleiner 0,1 mm (Schluff), 0,1 bis 2 mm (Sand) und größer 2 mm (Kies) vorbereitet. Die Fraktionierung ist für den Erfolg der nachgeschalteten Extraktionsreaktoren maßgebend. Während in der Station 4 "Kiesseparierung" nach einer Waschtrommel 4.1 Kies ausgesondert und über entsprechende Förderanlagen 4.2 der Station 7 "Schadstoffextraktion Kies" sowie Sand über eine Förderanlage 4.3 zunächst der Station 5 "Sandseparierung" mit einem Waschsieb 5.1 und dann über eine Förderanlage 5.2 der Station 8 "Schadstoffextraktion Sand" zugeführt werden, verbleibt der Schluff im Waschwasser, das in der Station 6 "Wasseraufbereitung" in einem Lamellenklärer 6.1 vom Schluff getrennt wird. Der Schluff gelangt über Schlammpumpen 6.2 in die Station 9 "Schadstoffextraktion Schluff", während das Wasser in einem eigenen Kreislauf 6.3 in an sich bekannter Weise aufbereitet, gegebenenfalls als Abwasser 6.4 abgeführt bzw. durch Frischwasser 6.5 ergänzt wird.

Ein oder mehrere Extraktionsreaktoren bilden in jeder der Stationen 7, 8 und 9 die eigentliche Reinigungsstufe des erfindungsgemäßen Verfahrens. In den Extraktionsreaktoren werden die Schadstoffe von den Feststoffen gelöst und separiert bzw. in einer mikrobiellen Behandlung abgebaut. In der Zeichnung sind in jeder der Behandlungsstationen 7, 8 und 9 jeweils zwei Reaktoren 7.1, 8.1 und 9.1 sowie 7.2, 8.2 und 9.2 dargestellt, von denen jeweils einer der physikalisch-chemischen und der andere der mikrobiellen Behandlung dienen, die selbstverständlich nur fallweise beide durchgeführt zu werden brauchen. Jedem der Reaktoren 7.1/2, 8.1/2, 9.1/2 ist eine Anlage 7.3/4, 8.3/4 und 9.3/4 zur Regenerierung des Extraktionsmediums zugeordnet. Als Extraktionsreaktoren dienen Behälter oder Becken aus Stahl oder Stahlbeton, in denen der nach Fraktionen getrennte Boden zumindest im wesentlichen in Ruhe befindlich durchströmt werden kann. Die Durchströmung erfolgt vorzugsweise von unten nach oben. Die Behandlung kann entweder kontinuierlich erfolgen, wobei laufend von oben her neues, verunreinigtes Material zugeführt und unten das behandelte, gereinigte Material abgeführt wird, oder auch chargenweise. Letzteres ist vor allem dann vorzuziehen, wenn zur Desorption längere Behandlungszeiten erforderlich sind. Es ist auch möglich, einzelne Bodenfraktionen unterschiedlich zu behandeln, beispielsweise die feineren Bodenfraktionen kontinuierlich und die gröberen Fraktionen stationär oder umgekehrt.

Die erfindungsgemäße Behandlung des nach einzelnen Kornfraktionen getrennten Bodens in gesonderten Extraktionsreaktoren hat den Vorteil, daß der Boden in gut durchströmbarer Weise in Kammern eingeschlossen ist, in denen er zur Desorption der Schadstoffe nacheinander mit unterschiedlichen Extraktionsmedien in unterschiedlicher Weise und unter unterschiedlichen Bedingungen behandelt werden kann, um eine optimale Reinigungswirkung zu erzielen. Besonderes Gewicht liegt dabei auf der Durchströmbarkeit des Bodens infolge einheitlicher Korngrößen, die den Porenraum und so die Durchströmungsgeschwindigkeit bestimmen. Zudem braucht eine Beeinträchtigung der Umwelt infolge Kontaminierung der Luft nicht befürchtet zu werden, da die Behälter geschlossen sind.

Für die physikalisch-chemische Reinigungsstufe ist vorgesehen, daß sie hauptsächlich im anorganischen Bereich wirkt und schwerpunktmäßig auf die Lösung der Schwermetalle von den Bodenteilchen abzielt. Dabei nimmt das Extraktionsmedium die Schadstoffe auf; die Schadstoffübertragung erfolgt in den Bodenpartikeln durch Diffusion, also durch ein Konzentrationsgefälle von Boden zu Extraktionsmedium, während der Weitertransport der Schadstoffe im Extraktionsmedium durch Strömung geschieht. Die Schadstoffe werden also durch Diffusion aus den Bodenpartikeln heraustransportiert, um sich danach im Extraktionsmedium zu verteilen und durch dieses weitertransportiert zu werden.

Ein wichtiger Gesichtspunkt beim Extraktionsprozeß ist die Berücksichtigung des Faktors Zeit. Für die unterschiedlichen Korngrößen ergeben sich unterschiedliche Extraktionszeiten. Die Reaktoren werden für Kornfraktionen größer 0,1 mm zweckmäßig als Festbettreaktoren ausgelegt, in denen der Boden sich in Ruhe befindet und von dem Extraktionsmedium durchströmt wird; sie können für andere, z.B. Feinkornfraktionen, gegebenenfalls auch als Mischer konzipiert sein.

Als Extraktionsmedium dient vorzugsweise Wasser, das je nach Bodenzusammensetzung und -belastung von sauer über neutral bis basisch eingestellt werden kann. Dem Extraktionsmedium können auch Komplexbildner zugegeben werden, um die Schadstoffe zu mobilisieren und so leichter durch Diffusion austreiben zu können.

Für organische Kontaminationen ist die mikrobiologische Verfahrensstufe vorgesehen. Gegenüber an sich bekannten Mietenverfahren können in einem Extraktionsreaktor optimale Lebensbedingungen für Bakterien hinsichtlich Nahrungsangebot, Sauerstoff, Feuchtigkeit und Temperatur geschaffen und aufrechterhalten und somit erheblich höhere Abbauleistungen erzielt werden. Demzufolge liegt die Verweildauer des zu behandelnden Bodens in der biologischen Stufe im Bereich weniger Tage oder Wochen, so daß die Reaktorgrößen übersichtlich bleiben.

In Kombination mit den vorstehend behandelten Verfahren können auch noch weitere physikalische Methoden wirksam werden. So kann beispielsweise in den Reaktoren ein Unterdruck erzeugt werden, der zu einer Entgasung des Bodens führt. Auch können Temperaturerhöhungen die Schadstoffextraktion beschleunigen.

Während nach der Erfindung die Desorption der Schadstoffe von den Bodenteilchen im Vordergrund steht, können für die Aufbereitung der eingesetzten Extraktionsmedien oder Reagenzien an sich bekannte Verfahren und Einrichtungen genutzt werden.

Der dekontaminierte Boden wird von den Stationen 7, 8 und 9 jeweils über Förderanlagen 7.5, 8.5 und 9.5 einer Station 10 "Nachklassierung" zugeführt, wo er in an sich bekannter Weise in weitere Kornfraktionen aufgetrennt und diese in einer Silobatterie 10.1 gelagert werden, von wo sie einer Verwendung zugeführt werden können.

Die Verwertung des dekontaminierten Bodens ist grundsätzlich beliebig. Das Kornband 2 bis 64 mm kann bei hohem Bauschuttanteil komplett oder zum Teil als Füllmaterial eingesetzt, andernfalls klassiert und als Kies verkauft werden. Das Material 0,1 bis 2 mm kann als Sand verwertet oder auch mit dem dekontaminierten Feinstkorn kleiner 0,1 mm zu rekultivierungsfähigem Boden vermischt werden. Die Metalle aus der physikalischen Metallseparation und aus der Extraktionsmittelaufbereitung können im Rahmen einer Metallverwertung verwertet werden. Lediglich der nichtrecyclingfähige Anteil von etwa 5 % aus der Extraktionsmittelaufbereitung gegenüber bisher etwa 20 bis 40 % muß verbrannt oder deponiert werden.

**Patentansprüche**

1.  Verfahren zum Dekontaminieren von mit Schadstoffen, wie z.B. Schwermetalle, Kohlenwasserstoffe, persistente Giftstoffe oder dergleichen verunreinigten Böden, bei dem der Boden nach einer Vorklassierung und gegebenenfalls einer physikalischen Metallabscheidung einer Behandlung mit einem Extraktionsmedium ausgesetzt wird, durch das die Schadstoffe gelöst, ausgetragen und/oder in unlösliche Stoffe umgewandelt werden, dadurch gekennzeichnet, daß in dem zu behandelnden Boden Porenräume erzeugt bzw. vorhandene Porenräume vergrößert werden, und daß durch diese Porenräume ein die jeweiligen Schadstoffe sorbierendes Extraktionsmedium geleitet wird, wobei die Kontaktzeiten zwischen dem Boden und dem Extraktionsmedium so gewählt werden, daß die Schadstoffe im Wege der Diffusion von diesem aufgenommen werden.

2.  Verfahren nach Anspruch 1, dadurch gekennzeichnet, daß der zu behandelnde Boden in unterschiedliche Kornfraktionen getrennt wird und daß diese getrennt voneinander behandelt werden.

3.  Verfahren nach Anspruch 2, dadurch gekennzeichnet, daß der Boden in Kornfraktionen von kleiner 0,1 mm, 0,1 bis 2 mm und größer 2 mm Durchmesser getrennt wird.

4.  Verfahren nach einem der Ansprüche 1 bis 3, dadurch gekennzeichnet, daß der Boden in mindestens einem, im wesentlichen geschlossenen Behälter behandelt wird, der von dem Extraktionsmedium durchströmt wird.

5.  Verfahren nach Anspruch 4, dadurch gekennzeichnet, daß die Behandlung des Bodens chargenweise erfolgt, wobei sich der Boden in dem Behälter während der Behandlung in Ruhe befindet.

6. Verfahren nach Anspruch 4, dadurch gekennzeichnet, daß die Behandlung des Bodens in einem kontinuierlichen Verfahren derart erfolgt, daß der Boden in dem Behälter gegen die Strömungsrichtung des Extraktionsmediums bewegt wird.

7. Verfahren nach einem der Ansprüche 1 bis 6, dadurch gekennzeichnet, daß die Behandlung des Bodens in Abhängigkeit von den zu extrahierenden Schadstoffen und/oder dem zu verwendenden Extraktionsmedium druck- und/oder temperaturbeeinflußt erfolgt.

8. Verfahren nach einem der Ansprüche 1 bis 7, dadurch gekennzeichnet, daß ein flüssiges oder gasförmiges Extraktionsmedium verwendet wird.

9. Verfahren nach einem der Ansprüche 1 bis 8, dadurch gekennzeichnet, daß dem Extraktionsmedium Zusatzstoffe beigegeben werden, wie z.B. Komplexbildner, Mikroorganismen oder dergleichen.

10. Verfahren nach einem der Ansprüche 2 bis 9, dadurch gekennzeichnet, daß eine Bodencharge nacheinander mit unterschiedlichen Extraktionsmedien behandelt wird.

11. Einrichtung zur Durchführung des Verfahrens nach den Patentansprüchen 2 bis 10, gekennzeichnet durch eine der Anzahl der Kornfraktionen entsprechende Anzahl von Behältern, in denen jeweils eine Kornfraktion des Bodens behandelt werden kann.

12. Einrichtung nach Anspruch 11, dadurch gekennzeichnet, daß die Behälter als Rotationskörper mit vorzugsweise vertikaler Achse ausgebildet sind.

13. Einrichtung nach Anspruch 11 oder 12, dadurch gekennzeichnet, daß die Behälter aus Stahlbeton bestehen.

Station 1
1.1
1.2
1.3
1.4

Station 2
2.1
2.2
2.3

Station 3
3.1
3.2
3.3

Station 4
4.1
4.2
4.2
4.3

Station 5
5.1

Station 6
6.1
6.2
6.3
5
4

Station 9
9.1
9.2
9.3
9.4
9.5

Station 8
8.1
8.2
8.3
8.4
8.5
5.2

Station 7
7.1
7.2
7.3
7.5

Station 10
10.1

6

EP 0 509 474 A2